Europäisches Patentamt

European Patent Office

Office européen des brevets

(11) Veröffentlichungsnummer: **0 451 582 A2**

# EUROPÄISCHE PATENTANMELDUNG

(21) Anmeldenummer: 91104595.3

(51) Int. Cl.⁵: **G11B 23/087**

(22) Anmeldetag: 23.03.91

(30) Priorität: 02.04.90 DE 9003809 U

(43) Veröffentlichungstag der Anmeldung:
16.10.91 Patentblatt 91/42

(84) Benannte Vertragsstaaten:
AT BE CH DE FR GB IT LI NL SE

(71) Anmelder: **BASF Aktiengesellschaft
Carl-Bosch-Strasse 38
W-6700 Ludwigshafen(DE)**

(72) Erfinder: **Wolf, Hans Joachim
Bergweg 7
W-7137 Diefenbach-Sternenfels(DE)**

(54) Bandkassette für Aufzeichnungsträger, insbesondere Magnetbandkassette.

(57) Eine Spulen- bzw. Wickelkern-Drehbewegung läßt sich in einer Bandkassette mit einer zumindest teilweise durchsichtigen Abdeckung oberhalb und/oder unterhalb der Spule bzw. des Wickelkerns in technischer und ästhetischer Weise sichtbar machen. Vorteilhaft enthält die Abdeckung wenigstens eine Aussparung und die Spule bzw. der Wickelkern wenigstens ein Kontrastmuster z.B. zur Form und Farbe der Abdeckung. Verwendbar ist die Muster-Abdeckungskombination für alle Kassetten mit Aufzeichnungsträger, worin eine Bewegung des Aufzeichnungsträgers, insbesondere eines Magnetbandes, einer Magnetplatte, eines Films, einer optischen Platte usw. erfolgt.

EP 0 451 582 A2

Die Erfindung betrifft eine Bandkassette für Aufzeichnungsträger, insbesondere Magnetbandkassette, bestehend aus zwei Gehäusehälften, die zumindest eine drehbare Spule und einen zumindest zeitweise darauf aufgewickelten Aufzeichnungsträger umschließen, und wobei zumindest eine der Gehäusehälften mit einer optischen Abdeckung versehen ist.

Unter Kassette für Aufzeichnungsträger wird im weitesten Sinne jeder Aufzeichnungsträger vom Film über Video- und Audioband bis hin zu Lochstreifen und Schreibmaschinenbändern und von Videoplatten bis hin zu Datenplatten und Disketten verstanden, der entweder überwiegend in einer Kassette oder einer sonstigen Hülle aufbewahrt und innerhalb der Kassette oder Hülle abspielbar ist.

Am Beispiel der Audio-Kassetten soll die vorliegende Erfindung erläutert werden.

Auf dem Sektor der Audio-Kassetten sind verschiedene Wege beschritten worden, um die Kassetten verschiedener Typen, Arten und Hersteller voneinander zu unterscheiden. Einige Wege waren verschiedene Farbgebungen oder die Oberflächenstrukturen der Kassettengehäuse oder weitere Designmerkmale wie Fenstergröße und -anordnung, Farbe und Design der Wickelkerne, Farbe der Vorspannbänder usw.

Hinsichtlich der Wickelkerne ist auch bereits versucht worden, ästhetische Unterschiede durch Durchbrechungen und/oder Strukturen in bzw. auf den Wickelkernen direkt zu erzielen.

Es ist eine Magnetbandkassette mit einer Vorrichtung zur Anzeige der abgewickelten Bandlänge bekannt, wobei im Kassettengehäuse ein Fenster angeordnet ist, in dem Skaleneinteilungen sichtbar werden, die auf sonst unsichtbaren Kranzelementen der Anzeigevorrichtung innerhalb des Kassettengehäuses vorgesehen sind.

Es ist Aufgabe der vorliegenden Erfindung, eine Einrichtung zum Darstellen bzw. Sichtbarmachen der Spulenumdrehung bereitzustellen.

Die Aufgabe wird mit einer Bandkassette für Aufzeichnungsträger, insbesondere Magnetbandkassette, bestehend aus zwei Gehäusehälften, die zumindest eine drehbare Spule und einen zumindest zeitweise darauf aufgewickelten Aufzeichnungsträger umschließen, und wobei zumindest eine der Gehäusehälften mit einer optischen Abdeckung versehen ist, gelöst, wenn die optische Abdeckung(en) derartig oberhalb und/oder unterhalb der Spule angeordnet und ausgebildet ist (sind), daß Teile der drehenden Spule nur zeitweise sichtbar sind.

Damit wird erreicht, daß eine drehgeschwindigkeitsabhängige optische Anzeige erhalten wird, wovon beispielsweise ablesbar ist, ob eine gleichmäßige oder ungleichmäßige Drehbewegung erfolgt.

Die Spule kann selbstverständlich als Flanschspule oder flanschloser Wickelkern ausgebildet sein.

Es ist vorteilhaft, wenn die Abdeckung teilweise durchsichtig ausgebildet und drehfest vorgesehen ist.

In weiterer Ausbildung kann die Abdeckung zwischen dem oberhalb und/oder unterhalb des Spulenmittelbereichs bzw. dem Wickelkern angeordneten Bereich der Gehäusehälften, insbesondere eines Fensterbereichs, und der Spule bzw. dem Wickelkern vorgesehen sein.

Je nach Wunsch kann die Umrißkontur der Abdeckung etwa entsprechend der Größe des Spulmittelbereichs bzw. des Wickelkerns oder aber größer oder kleiner ausgebildet ist.

Dadurch können unterschiedliche Design-Effekte realisiert werden.

Wesentliche ästhetische Wirkungen lassen sich erzielen, wenn der Spulenmittelbereich bzw. Wickelkern mit einem Helldunkel- oder Farbkontrastmuster versehen ist und die Abdeckung Aussparungen enthält, wobei die Farbe der Abdeckung in einem Helldunkel- oder Farbkontrast zum Muster der Spule bzw. des Wickelkerns ausgebildet ist.

Als Muster lassen sich vielfältige Möglichkeiten verwenden. Als besonders markant haben sich geometrische Muster, z.B. Dreiecke, Quadrate, Kreisformen usw. herausgebildet. Es ist auch möglich, daß das Muster wenigstens ein linienförmiges Motiv ist und die Aussparung zumindest eine entsprechende linienförmige Form besitzt. Auch unterbrochene Motive sind durch entsprechende Motiv-Ausbildung auf dem Wickelkern und die entsprechende Ausbildung der Aussparung der Abdeckung realisierbar.

Das Aufbringen des Musters als auch der Abdeckung läßt sich durch Bedrucken, Bekleben, im 2-Farben-Spritzguß oder Bemalen bewerkstelligen. An der Spule oder am Wickelkern kann auch ein Ring mit wenigstens einem Muster angebracht sein.

Die Abdeckung kann bei einer gespritzten oder sonstwie mit Farbe versehenen Kassettenwand auch durch Teil-Entfernen der Farbe erzeugt werden.

Es ist ferner auch möglich, die Abdeckung mittels wenigstens einer eingefärbten Folie, insbesondere auch mittels einer üblichen Beilagefolie herzustellen.

Es ist auch möglich, die Abdeckung mittels einer zusätzlichen Abdeckfolie, auch von Ovalform oder Kreisform, anzubringen. Das Muster der Spule oder des Wickelkerns kann auch wenigstens teilweise auf erhabenen oder vertieften Teilen des Spulenmittelbereichs oder des Wickelkerns vorgesehen sein, da damit ein Bedrucken des positiven oder negativen Musters sehr vereinfacht wird.

In allen erfindungsgemäßen Ausführungen erhält die Kassette mit relativ einfachen Mitteln einen besseren Gebrauchswert durch Sichtbarmachung der Bewegung der einen oder beider Spulen sowie durch eine verbesserte Ästhetik und höhere Unterscheidungskraft im Vergleich zu anderen Kassetten.

Das Kennzeichen ist bei allen Geräten, in denen die Kassetten bzw. Aufzeichnungsträger teilweise oder vollständig sichtbar sind, sehr schnell wahrnehmbar, da die zusätzliche oder einzige Bewegung der Muster oder Motive in der Aussparung der Abdeckung sofort auffällt.

Durch die Vielzahl von Ausführungsmöglichkeiten der erfindungsgemäßen Bandkassette lassen sich Kassetten verschiedener Spielzeiten, Typen, Arten oder Hersteller einfach mit charakteristischen Unterscheidungsmerkmalen ausbilden.

Die Erfindung wird im folgenden anhand von in der Zeichnung dargestellten Ausführungsbeispielen beschrieben:

Es zeigen

Figur 1
eine Kompakt-Kassette in Explosionsdarstellung mit Wickelkernen, Beilagefolien und Abdeckungen an den Gehäusewänden

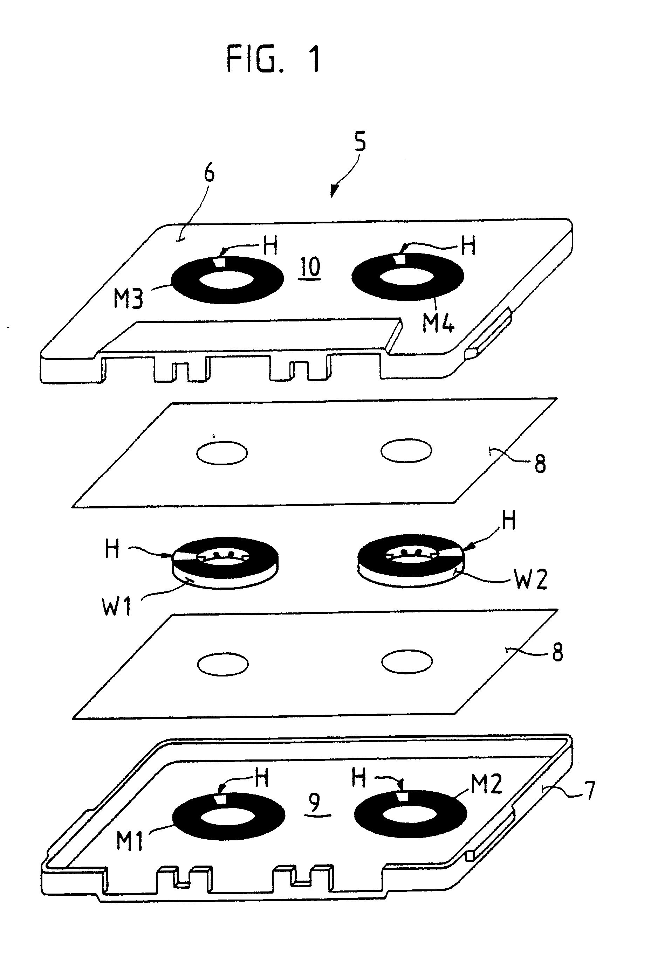

Figur 2
eine Variante der Kassette nach Figur 1, wobei die Abdeckungen auf den Beilagefolien vorgesehen sind

Figur 3
eine Variante mit je einer Abdeckungsfolie und einer Beilagefolie an einer Seite der Wickelkerne

Figur 4A
eine ovale Abdeckungsfolie

Figur 4B
zwei kreisförmige Abdeckungsfolien

Figur 5
eine Kompakt-Kassette gemäß Figur 1 und Wickelkernen mit Kennzeichnungen

Figur 6A + B
Ausführungen eines Wickelkerns und einer Abdeckung mit Sektoren-Zeichen

Figur 6, I-III
Momentdarstellungen des Bewegungsablaufs des Wickelkerns unter der Abdeckung gemäß Figur 6

Figur 7A + B, I-III
Ausführungen wie Figur 6, jedoch mit Punkt-Zeichen

Figur 8A + B, I-III
Ausführungen wie Figur 6, jedoch mit Schlangenlinien-Zeichen

Figur 9A + B, I-III
Ausführungen wie Figur 6, jedoch mit Dreiecks-Zeichen

Figur 10A + B, I-III
Ausführung wie Figur 9, jedoch mit vertauschten Zeichen auf Abdeckung und Wickelkern

Figur 11A + B, I-III
Ausführung wie Figur 6, jedoch mit Rautenform-Aussparungen und -Kennzeichen

Figur 12A + B, I-III
Ausführung wie Figur 6, jedoch mit einem Elefanten-Kennzeichen.

Figur 1 zeigt eine Kompakt-Kassette 5 in vereinfachter Darstellung mit Gehäusehälften 6 und 7, rechteckförmigen Beilagefolien 8 sowie flanschlosen Spulenkernen, hier als Wickelkerne W1 und W2 bezeichnet. Es wird in diesem Beispiel angenommen, daß die Gehäusehälften aus transparentem oder wenigstens teildurchsichtigem Material, z.B. aus Polystyrol, bestehen. Unter dieser Voraussetzung ist es erforderlich, Abdeckungen oder Masken M1-4 an den Boden- und Deckelwänden 9 und 10 der Gehäusehälften 6 bzw. 7 vorzusehen, um die Wickelkerne W1 und W2 wenigstens teilweise abzudecken bzw. nur zeitweise sichtbar zu machen.

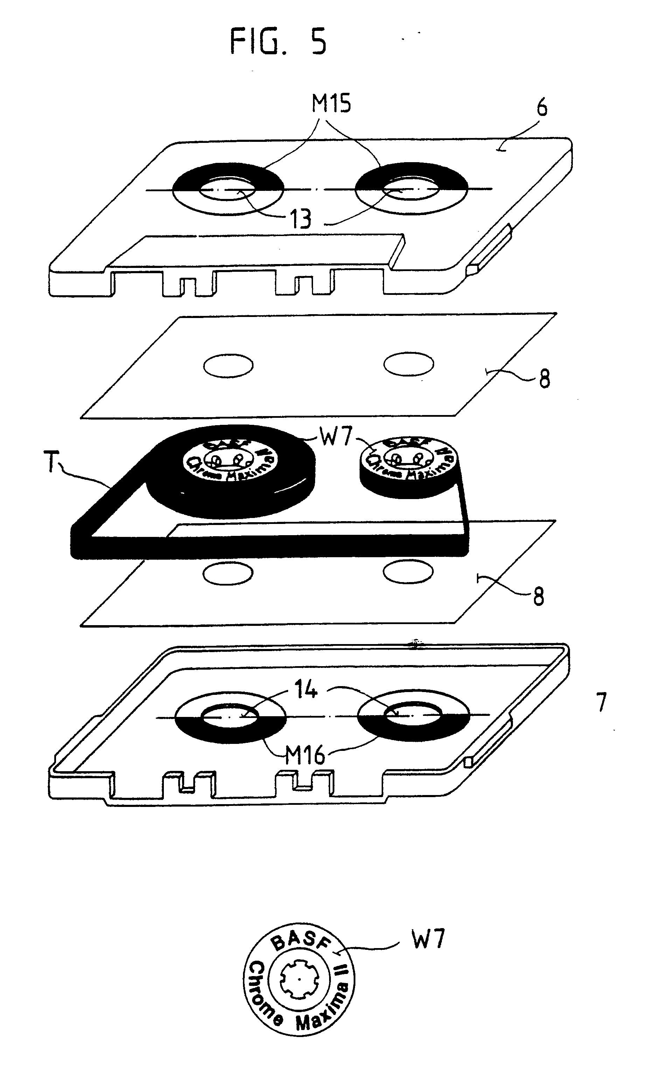

In der Figur 1 sind die Wickelkerne W1 und W2 mit einem Kennzeichen oder Muster K sowie jede der ringförmigen Abdeckungen M1-M4 mit je einer radialen Hell-Aussparung H versehen, die gleichgroß oder verschieden groß sein können. Bei Drehbewegung der Wickelkerne W1 und W2, bei Spielbetrieb oder Spulbetrieb des nur in Figur 5 dargestellten Magnetbandes I, wird bei jeder vollen Wickelkern-Umdrehung ein helles oder weißes Aufblitzen des Kennzeichens K in jeder Aussparung H der Abdeckungen M1-M4 sichtbar.

Die Aussparungen H können bei nebeneinanderliegenden Abdeckungen M1 und M2 bzw. M3 und M4 auch an radial unterschiedlichen Stellen vorgesehen sein.

Wenn die dunklen Teile der Wickelkerne W und der Abdeckungen M komplementär mit den hellen Teilen (Kennzeichen K bzw. Aussparungen H) vertauscht werden, ergibt sich wirkungsmäßig bei jeder Wickelkern-Umdrehung jeweils ein dunkles oder schwarzes Aufblitzen.

Im folgenden wird die Erfindung mit Hell-Dunkel-Ausführungen und -effekten beschrieben. Es wird jedoch darauf hingewiesen, daß es nur auf die Unterscheidbarkeit der Kennzeichen und Abdeckungen ankommt, wobei die Abdeckungen auch einfachheitshalber als undurchsichtig abdeckend angenommen werden sollen.

Es ist, da es in erster Linie nur auf den Hell-Dunkel-Kontrast ankommt, durchaus auch möglich, entsprechende Kontrast-Farben zu verwenden.

Es kann für einige Verwendungen auch vorteilhaft sein, nicht völlig abdeckende Abdeckungen zu verwenden, um z.B. einen besonderen Milch- oder Unterwassereffekt zu erzielen.

Vorstehende Ausführungen zum Hell-Dunkel-bzw. Farbkontrast sind auch sehr von den Licht- und Beleuchtungsverhältnissen an den Kassettengeräten abhängig. Durch die Verwendung von Leuchtdioden oder Leuchtfarben lassen sich diese Verhältnisse jedoch verbessern.

Der einfachen und einprägsamen Darstellung wegen sind alle Abdeckungen M mit Ringform in einer Breite ausgeführt, die den Wickelkern W selbst auf jeden Fall abdecken, auch wenn ein sonst transparentes Gehäuse benutzt wird. Die Abdeckungen M haben überdies in der Zeichnung eine konstante Ringbreite, was in der Praxis auch nicht notwendig ist, da sich bei ungleicher Breite besondere, z.B. exzentrische, Bewegungsabläufe erzeugen lassen.

Die Abdeckungen am Kassettengehäuse können in jeder geeigneten Weise hergestellt werden, z.B. durch Bedrucken, Bekleben oder Bemalen einer wenigstens teilweise transparenten Kassettenwandung oder auch durch Zwei-Farben-Spritzguß der Kassettenhälfte(n). Wenn die Kassettenwandungen mit Farbe versehen sind, können die Aussparungen der Abdeckung auch durch Entfernen der Farbe ausgebildet werden. Die Wickelkerne können nach denselben Verfahren mit Farbe versehen bzw. von Farbe befreit werden. Wenn die Wickelkerne, die Kennzeichen als erhabene Prägungen oder Vertiefungen aufweisen, kann das Aufbringen der Farbe auf die übrigen Flächenbereiche auch durch Aufrakeln usw. von Farbe erzeugt werden.

Bei Wickelkernen ist auch das Aufklemmen einer Platte oder Haube mit den Kennzeichen möglich.

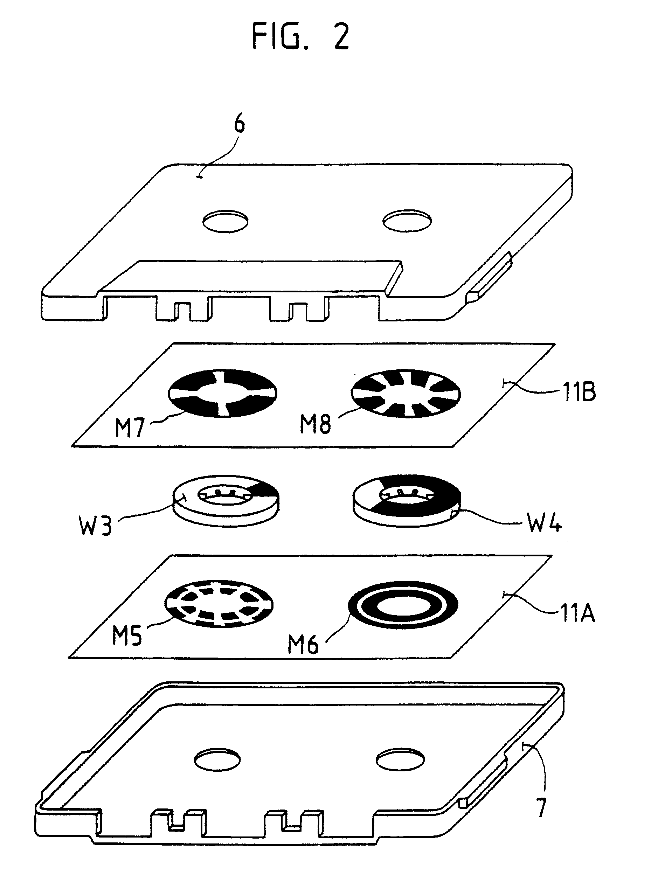

In Figur 2 sind die Gehäusehälften 6 und 7, Beilagefolien 11A und 11B sowie Wickelkerne W3 und W4 dargestellt, wobei die Abdeckungen M5-M8 hier auf den Beilagefolien 11 direkt vorgesehen sind. Die Gehäusehälften 6 und 7 müssen also zumindest im darüberliegenden Ringbereich, entsprechend dem Ringbereich der Abdeckungen M1-M4 in Figur 1, durchsichtig oder wenigstens teildurchsichtig sein.

Die besonderen Kennzeichen dieser Ausführung sind:

M5: eine kombinierte Ring- und Radialstreifenaussparung
M6: eine Ringaussparung
M7: eine Kreuzaussparung
M8: eine Mehrfach-Radialstreifen-Aussparung
W3: ein dunkler kurzer Kontrastsektor als Kennzeichen
W4: ein dunkler langer Kontrastsektor als Kennzeichen.

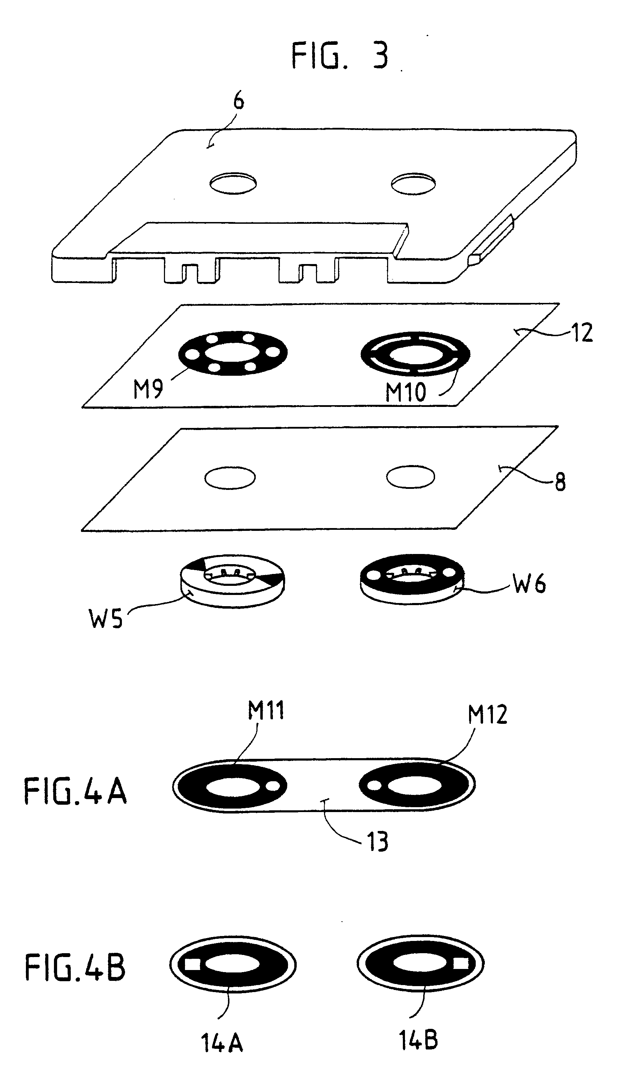

In Figur 3 ist im Unterschied zur Figur 2 an jeder Wickelkernseite je eine übliche Beilagefolie 8 und zusätzlich eine Folie 12 mit vorzugsweise planer Ausbildung als reine Abdeckfolie zwischen den Kassettenhälften 6 bzw. 7 und der jeweiligen Beilagefolie 8 vorgesehen.

Besondere Kennzeichen dieser Ausführung sind:

M9: sechs kreisförmige, helle Aussparungen
M10: vier Bogenabschnitte als Kontrast-Aussparungen
W5: zwei dreiecksförmige Kontrastsektoren als Kennzeichen
W6: zwei diagonal angeordnete helle Kreisform-Kontrastbereiche als Kennzeichen.

Die Abdeckfolie 12, die in Figur 3 rechteckförmig ausgebildet ist, kann auch gemäß Figur 4A als Ovalfolie 13 oder Figur 4B als zwei separate Kreisformfolien 14A und 14B ausgebildet sein.

Die Abdeckungen sind mit M11 und M12 als je eine helle Kreisform-Aussparung und M13 und 14 als Quadrat- oder Rechteckfenster-Aussparung ausgestaltet, wobei letztere auf gemeinsamen Diagonalen, hier auf der Verbindungslinie der Mittelpunkte der Abdeckfolien 14A und 14B, angeordnet sind.

Figur 5 zeigt eine Kassette, ebenfalls mit den Gehäusehälften 6 und 7 sowie mit Abdeckungen M15 bzw. M16, zwei Beilagefolien 8 und Wickelkernen W7. Der Wickelkern W7 ist in Figur 5A in Draufsicht dargestellt und enthält die Aufschrift BASF® Chrome Maxima II® wovon die Bezeichnungen BASF® und Maxima® eingetragene Warenzeichen der BASF Aktiengesellschaft, D-6700 Ludwigshafen sind.

Auf den zwei Wickelkernen W7 befindet sich jeweils ein Bandwickel eines Magnetbandes T. Die Abdeckungen M15 und M16 haben Halbringform ebenso wie die Aussparungen, wobei die Trennlinie in der Verbindungslinie der Mittelpunkte der Gehäuseantriebsöffnungen 13 bzw. 14 liegt. Die Halbringabdeckungen sind in bezug auf die Wickelkerne W7 so angeordnet, daß von einer Seite der Kassette gesehen die obere und von der andere Seite gesehen die untere Hälfte des Wickelkerns W7 abgedeckt ist. Die Aufschrift ist somit auf jeder Seite nur halb sichtbar, beide Seiten zusammengenommen jedoch vollständig sichtbar.

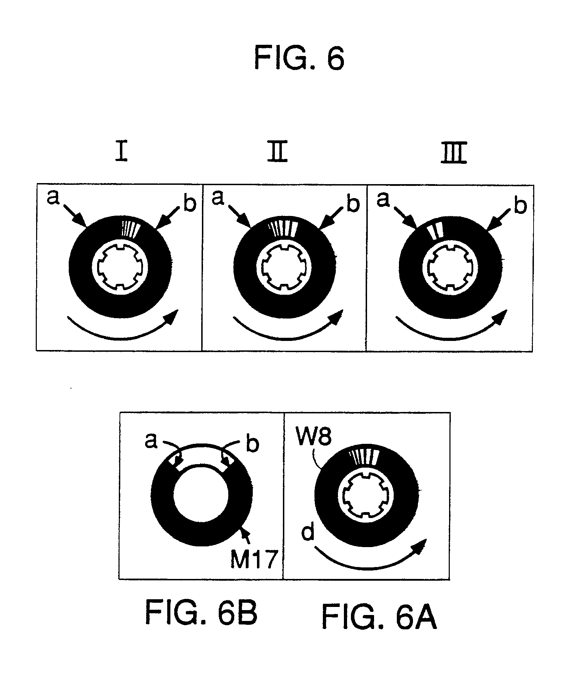

In den folgenden Figuren 6 bis 10 sind Beispiele von Wickelkern-Kennzeichen und Abdeckungsausführungen (A, B) dargestellt und anhand dreier Momentdarstellungen (I-III) in ihrem Bewegungsablauf auch näher erläutert.

Figur 6

M17 (Fig. 6B):
eine Abdeckung mit Einviertelform-Aussparung
W8 (Fig. 6A):
ein Wickelkern mit einem Serienfenster-Kennzeichen, wobei die Fenster unterschiedliche Breite, aber dieselbe radiale Länge aufweisen.

Der Pfeil d kennzeichnet die Drehrichtung des Wickelkerns.

In den Darstellungen I bis III wird der Wickelkern W8 unter der Abdeckung M17 (die in gestrichelten Pfeilen angedeutet ist) gedreht.

Die Grenzkantenlinien des Ausschnitts sind mit a und b bezeichnet.

Darstellung I:

Die beiden größten Fenster des Kennzeichens sind noch hinter der Grenzkantenlinie b bedeckt.

Darstellung II:

Die Fensterserie des Kennzeichens ist vollständig zwischen den Grenzkantenlinien a und b, also in der Aussparung sichtbar.

Darstellung III:

Die beiden größten Fenster des Kennzeichens sind gerade noch sichtbar vor dem Verschwinden hinter der Grenzkantenlinie a.

Figur 7

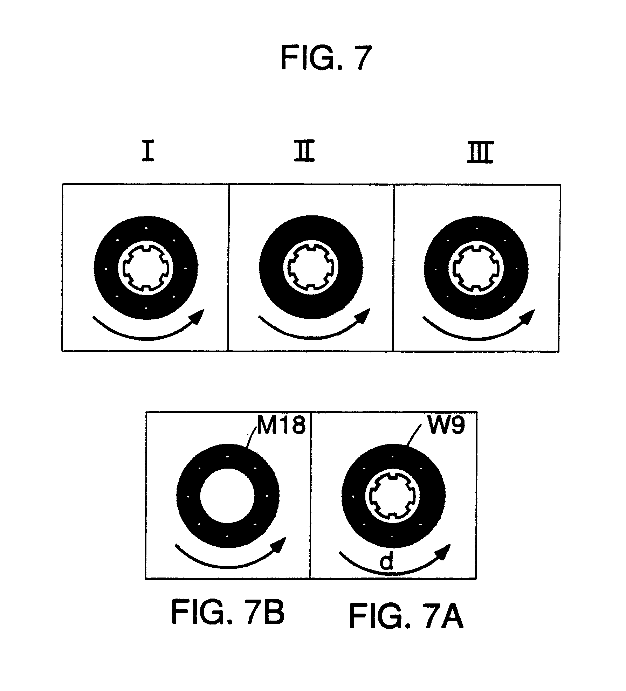

M18 (Fig. 7B):
eine Abdeckung mit 8 Punktform-Aussparungen
W9 (Fig. 7A):
Wickelkern mit entsprechenden 8 Punktform-Fenstern als Kennzeichen.

Darstellung I:

Die Punktform-Aussparungen (M 18) liegen genau über den Punktform-Fenstern (W 9) - es ergibt sich ein Punktform-Muster.

Darstellung II:

Die Punktform-Fenster (W9) liegen zwischen den Punktform-Aussparungen (M18), so daß volle Abdeckung auftritt.

Darstellung III:

Entspricht Darstellung I.

Ein teilweise Überschneidung ist nicht gezeigt.

Figur 8

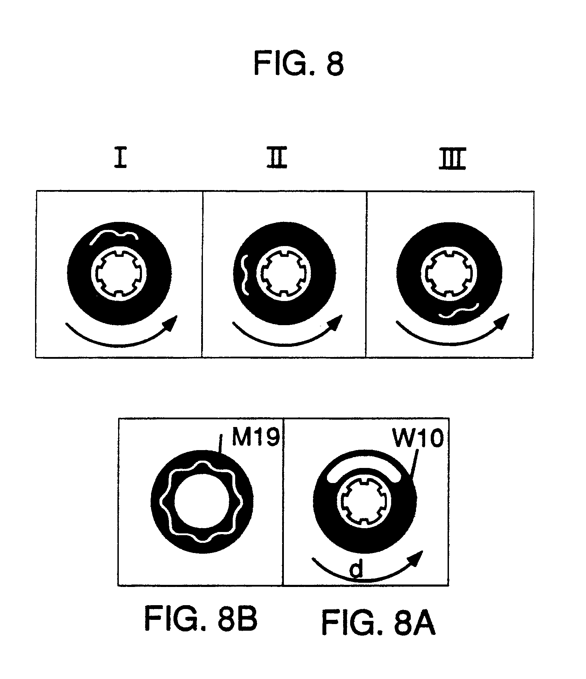

M19 (Fig. 8B):
Eine Aussparung ist eine geschlossene etwa regelmäßige Wellenlinie
W10 (Fig. 8A):
Ein Ovalform-Kennzeichen erstreckt sich über etwa 45° als Kontrastbereich.

Darstellung I bis III:

Ein Teilsektor der Wellenlinie wird in Drehrichtung fortlaufend sichtbar, so daß sich der Eindruck eines sich weiter bewegenden Wurms ergibt.

Figur 9

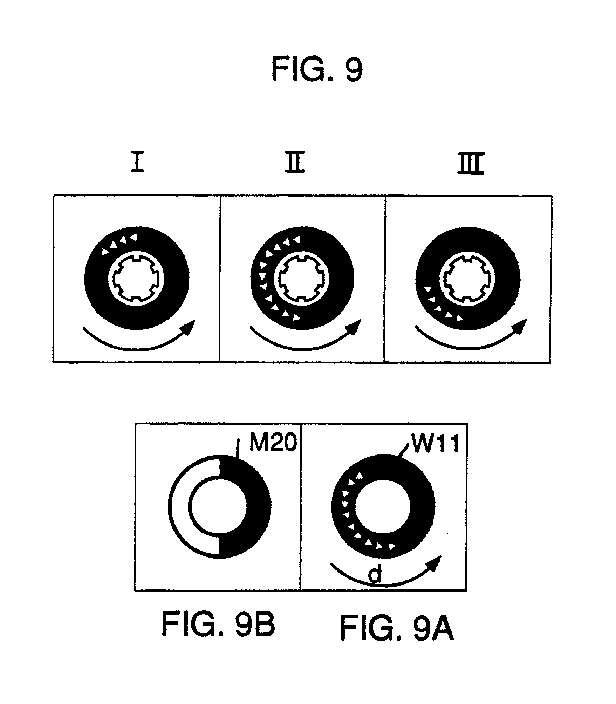

M20 (Fig. 9B)
ist mit einer Halbring-Abdeckung (wie M 15, M16), jedoch mit senkrechter Trennlinie ausgebildet

W11 (Fig. 9A)
ist eine Folge von hintereinander angeordneten Dreieckszeichen als Kontrastbereiche.

Darstellung II:

Die vollständige Zahl von Dreieckszeichen ist in der Aussparung sichtbar.

Darstellung I:

zeigt den Beginn des Eintritts der ersten 4 Dreieckszeichen vor Erreichung der Position der Darstellung II

Darstellung III:

zeigt als Ende der Dreieckszeichenfolge die letzten 5 Dreieckszeichen nach Erreichen der Position der Darstellung II.

Figur 10

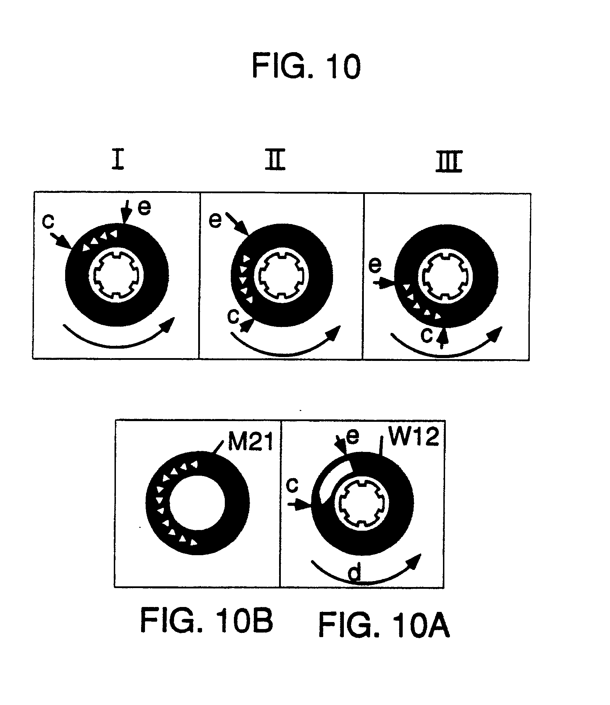

M21 (Fig. 10B)
entspricht als Aussparung den Dreieckszeichen des Wickelkerns W11 in Figur 9
W12 (Fig. 10A)
ist ein Langform-Kennzeichen, in Form und Größe dem Ovalform-Kennzeichen des Wickelkerns W10 in Figur 8 ähnlich.

Darstellung I-III:

In jedem der dargestellten Momente ist nur ein Teil der Dreiecks-Aussparungen sichtbar. Eine vollständige Darstellung aller Dreiecks-Aussparungen ist nur durch Verlängerung des Langform-Kennzeichens zumindest entsprechend der Länge der Dreiecks-Aussparungsfolge notwendig.

Die jeweilige Lage des Langform-Kennzeichens ist durch Pfeile c und e, die dessen Länge entsprechen, in den Darstellungen I-III erkennbar.

Die beschriebenen Ausführungsbeispiele und Bewegungsabläufe können nur einen kleinen Teil der Möglichkeiten verdeutlichen. Es soll jedoch nicht vergessen werden, daß eine Sichtbarmachung bzw. Ausnutzung der Spulendrehbewegung angestrebt ist, um einmal die Gleichmäßigkeit der Spulendrehung und damit des Bandlaufs sichtbar machen zu können bzw. bei Unregelmäßigkeiten auf diese rechtzeitig aufmerksam machen zu können und schließlich beide Kontollfunktionen mit ästhetischen Vorteilen zu verbinden.

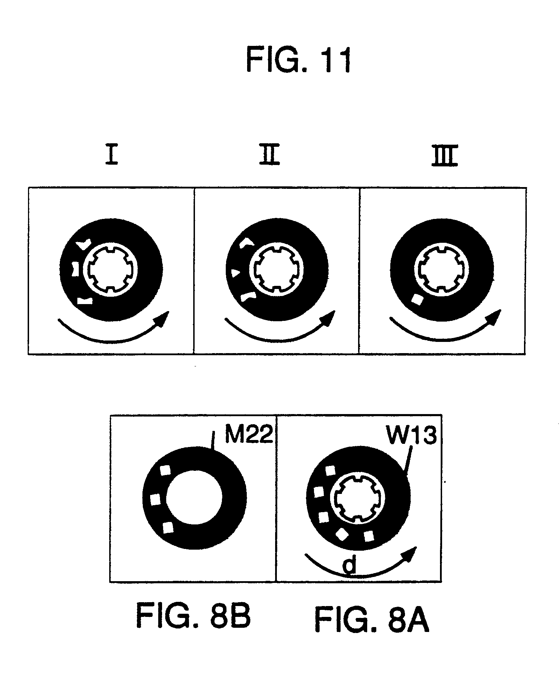

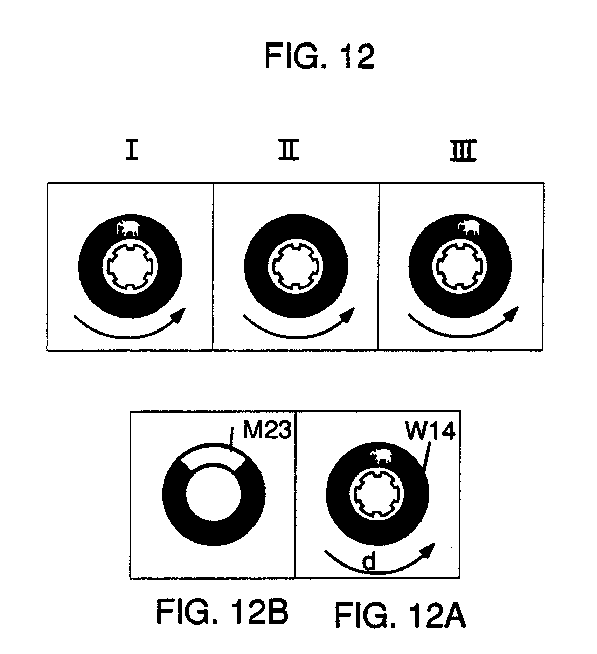

In letzterer Hinsicht sind der Phantasie keine Grenzen gesetzt. Es ist z.B. ohne weiteres denkbar, einen Pinguin auf der Kassette Eisstückchen fallen zu lassen, oder aufzufangen, die durch die Abdeckung und den drehenden Wickelkern in geeigneter Ausbildung erzeugbar sind (s. hierzu Figur 11). Es ist auch möglich, laufende Tiere (s. hierzu Figur 12) oder sich verfolgende Tierpaare (Katze und Hund) auf verschiedenen Durchmessern der Abdeckung und des Wickelkerns anzuordnen.

Wenn von der Ringform der Abdeckung ausgeghangen wird, sind sogar Unregelmäßigkeiten in der Wickelkerndrehung scheinbar zu erzeugen.

Auch kann die Größe der Abdeckung gegenüber dem Wickelkern als auch die Größe des Wikkelkerns gegenüber einer gewählten Abdeckung verändert werden.

Figur 11

M22 (Fig. 11B):
enthält 3 Quadrat-Aussparungen in verschiedenen Lagen
W13 (Fig. 11A):
zeigt 5 Quadrat-Kennzeichen.
Darstellungen I + II:
In jedem der dargestellten Momente sind 3 unregelmäßige und ungleich große Vielecke sichtbar.
Darstellung III:
Es ist ein kleines Viereck sichtbar.

Zusammen mit einer geeigneten zusätzlichen Darstellung auf der Kassette z.B. eines Pinguins läßt sich der Eindruck von fallenden Eisstücken erzeugen.

Figur 12

M23 (Fig. 12B):
entspricht M 17 (Figur 6B)
W14 (Fig. 12A):
Kennzeichen ist ein Kontrast-Elefant.
Darstellungen I + III
: Momentan ist ein Elefant sichtbar.
Darstellung II:
Es ist in diesem Moment kein Elefant sichtbar.

Mit einer Erhöhung der Zahl der Aussparungen auf zwei oder mehr ist eine häufigere Sichtbarmachung möglich. Anstelle des Elefanten-Kennzeichens ist ohne weiteres irgendein anderes Symbol, z.B. arabische, römische Zahlensymbole, verwendbar.

**Patentansprüche**

1. Bandkassette für Aufzeichnungsträger, insbesondere Magnetbandkassette, bestehend aus zwei Gehäusehälften (6, 7), die zumindest eine drehbare Spule (W) und einen zumindest zeitweise darauf aufgewickelten Aufzeichnungsträger (T) umschließen, und wobei zumindest eine der Gehäusehälftenn (6, 7) mit einer optischen Abdeckung versehen ist, dadurch gekennzeichnet, daß die optische Abdeckung(en) (M) derartig oberhalb und/oder unterhalb der Spule (W) angeordnet und ausgebildet ist (sind), daß Teile der drehenden Spule (W) nur zeitweise sichtbar sind.

2. Bandkassette nach Anspruch 1, dadurch gekennzeichnet, daß die Spule (W) als Flanschspule oder flanschloser Wickelkern ausgebildet ist.

3. Bandkassette nach Anspruch 1 und 2, dadurch gekennzeichnet, daß die Abdeckung (M) teilweise durchsichtig ausgebildet und drehfest vorgesehen ist.

4. Bandkassette nach Anspruch 3, dadurch gekennzeichnet, daß die Abdeckung (M) zwischen dem oberhalb und/oder unterhalb des Spulenmittelbereichs bzw. dem Wickelkern (W) angeordneten Bereich der Gehäusehälften (6, 7), insbesondere eines Fensterbereichs, und der Spule bzw. dem Wickelkern (W) vorgesehen ist.

5. Bandkassette nach den Ansprüchen 3 oder 4, dadurch gekennzeichnet, daß die Umrißkontur der Abdeckung (M) der Größe des Spulenmittelbereichs bzw. des Wickelkerns (W) im wesentlichen entspricht.

6. Bandkassette nach Ansprüchen 3 oder 4, dadurch gekennzeichnet, daß die Umrißkontur der Abdeckung (M) größer als der Spulenmittelbereich bzw. des Wickelkerns (W) ist.

7. Bandkassette nach Ansprüchen 3 oder 4, dadurch gekennzeichnet, daß die Umrißkontur der Abdeckung kleiner als der Spulenmittelbereich bzw. des Wickelkerns (W) ist.

8. Bandkassette nach Anspruch 1 und einem oder mehreren der Ansprüche 2 bis 7, dadurch gekennzeichnet, daß der Spulenmittelbereich bzw. Wickelkern mit einem Helldunkel- oder Farbkontrastmuster versehen ist und die Abdeckung (M3, M4) Aussparungen (H) enthält, wobei die Farbe der Abdeckung (M) in einem Helldunkel- oder Farbkontrast zum Muster (K) der Spule bzw. des Wickelkerns (W) ausgebildet ist.

9. Bandkassette nach Anspruch 8, dadurch gekennzeichnet, daß das Muster (K) und die Aussparungen (H) aus geometrischen Formen bestehen.

10. Bandkassette nach Anspruch 8, dadurch gekennzeichnet, daß die Aussparung (Abdeckung M19) wenigstens ein linienförmiges Motiv ist und das Muster (Wickelkern W10) eine entsprechende Form zur Sichtbarmachung der Linienform besitzt.

11. Bandkassette nach Anspruch 8, dadurch gekennzeichnet, daß das Muster ein unterbrochenes Motiv (Wickelkerne W8, W11) ist, das durch eine der Motivform entsprechende ununterbrochene Aussparung (Abdeckung M17, M20) sichtbar gemacht wird.

12. Bandkassette nach einem oder mehreren der Ansprüche 1 bis 11, dadurch gekennzeichnet, daß das Muster durch Bedrucken, Bekleben oder im Zwei-Farben-Spritzguß auf die Spule oder den Wickelkern (W) aufgebracht ist.

13. Bandkassette nach einem oder mehreren der Ansprüche 1 bis 11, dadurch gekennzeichnet, daß das Muster (K) durch Anbringen eines Ringes an den Seitenflächen der Spule bzw. des Wickelkerns hergestellt ist.

14. Bandkassette nach einem oder mehreren der Ansprüche 1 bis 13, dadurch gekennzeichnet, daß die Abdeckung (M) mit Ausnahme der Aussparung(en) (H) durch Bedrucken, Bekleben oder Bemalen einer transparenten Kassettenwandung herstellbar ist.

15. Bandkassette nach einem oder mehreren der Ansprüche 1 bis 13, dadurch gekennzeichnet, daß die Aussparung(en) (H) der Abdeckung (M) durch Entfernen von Farbe von den Kassettenwandungen erzeugt wird (werden).

16. Bandkassette nach einem oder mehreren der Ansprüche 1 bis 13, dadurch gekennzeichnet, daß die Abdeckung (M) mittels wenigstens einer eingefärbten Folie, insbesondere einer üblichen Beilagefolie (11A, 11B) erfolgt.

17. Bandkassette nach Anspruch 16, dadurch gekennzeichnet, daß die Abdeckung mittels einer zusätzlichen Abdeckfolie (12, 13, 14) erfolgt.

18. Bandkassette nach Anspruch 17, dadurch gekennzeichnet, daß die Abdeckfolie (13) Ovalform aufweist.

19. Bandkassette nach Ansprüchen 17 und 18, dadurch gekennzeichnet, daß die Abdeckfolie(n) (14A, 14B) Kreisform aufweist (aufweisen).

20. Bandkassette nach einem oder mehreren der Ansprüche 1 bis 19, dadurch gekennzeichnet, daß das Muster (K) der Spule oder des Wickelkerns (W) wenigstens teilweise auf erhobenen oder vertieften Teilen der Spulenkernmitte bzw. des Wickelkerns (W) vorgesehen ist.

# FIG. 1

# FIG. 2

6

M7 M8 11B

W3 W4

M5 M6 11A

7

# FIG. 3

6

12

M9    M10

8

W5    W6

## FIG.4A

M11    M12

13

## FIG.4B

14A    14B

# FIG. 5

# FIG. 6

I    II    III

FIG. 6B      FIG. 6A

# FIG. 7

I  II  III

M18  W9

FIG. 7B  FIG. 7A

# FIG. 8

FIG. 8B    FIG. 8A

# FIG. 9

I   II   III

FIG. 9B   FIG. 9A

# FIG. 10

I      II      III

FIG. 10B      FIG. 10A

# FIG. 11

I          II          III

FIG. 8B      FIG. 8A

# FIG. 12

I          II          III

M23

W14

FIG. 12B      FIG. 12A